# EUROPEAN PATENT SPECIFICATION

(11) **EP 3 449 169 B1**
(45) Date of publication and mention of the grant of the patent: **05.07.2023**
(21) Application number: 17709439.8
(22) Date of filing: 08.03.2017
(51) Int. Cl.: F16L 59/20, F16L 55/11

(54) **SYSTEM, USE OF A PLUG AND METHOD FOR SEALING A HOLE IN A SLEEVE POSITIONED BETWEEN INSULATED PIPES**
SYSTEM, STOPFEN VERWENDUNG UND VERFAHREN ZUR ABDICHTUNG EINES LOCHS IN EINER HÜLSE ZWISCHEN ISOLIERTEN ROHREN
SYSTÈME, UTILISATION D'UN BOUCHON ET PROCÉDÉ POUR FERMER HERMÉTIQUEMENT UN TROU DANS UN MANCHON POSITIONNÉ ENTRE DES TUYAUX ISOLÉS

(30) Priority: 26.04.2016 DK 201670253; 26.04.2016 DK 201670254; 26.04.2016 DK 201670255; 26.04.2016 DK 201670256
(43) Date of publication of application: 06.03.2019
(73) Proprietor: Logstor A/S, 9670 Løgstør (DK)
(72) Inventor: RØNBØG, Peter, 9230 Svenstrup (DK); HANSEN, Lars Bo, 9670 Løgstør (DK)
(74) Representative: Tomkins & Co
(86) International application number: PCT/EP2017/055436
(87) International publication number: WO 2017/186388

(56) References cited:
- EP-A1- 1 108 179
- EP-A1- 2 253 876
- EP-A1- 2 890 545
- EP-A2- 0 195 683
- WO-A1-2011/154005
- FR-A- 1 185 682
- FR-A1- 2 450 154
- GB-A- 2 119 884
- JP-A- S58 128 598
- KR-B1- 101 123 245
- US-A- 4 645 557

## Description

The invention relates to a system and a method for sealing a hole in a sleeve, where the sleeve is positioned between insulated pipes. The invention also relates to the use of a plug system.

### Background

When connecting insulated pipes, a (open) sleeve / shrink sleeve may be used. The insulated pipes normally comprise one or more inner pipes, a layer of insulation material and a layer of casing covering the insulation layer. Layers providing additional gas barrier functions may also be found, e.g. between the casing layer and the insulation layer. The casing layer will normally be a plastic layer such as a polyethylene (PE) or polypropylene (PP) layer, where the PE or PP layer can be cross-linked. The sleeve is typically made of similar materials, cross-linked or not cross-linked.

Before connecting two insulated pipes, the insulation layer and the casing are removed at the ends of the pipe such that a portion of the one or more inner pipes is exposed. In this way the inner pipe(s) on two different insulated pipes can be connected. Prior to connecting the inner pipes, a sleeve in the form of a shrink sleeve is pushed onto one of the insulated pipes. After connecting the inner pipes, the sleeve is moved such that it overlaps with the casing ends at the two insulates pipes and is shrunk onto these ends such that an annular space is created underneath the sleeve surface. As an alternative to a shrink sleeve, the sleeve may be a wrap, which is wrapped around the connecting between the two insulated pipes and welded whereby an annular space below the sleeve is created.

The annular space is normally filled with insulation material by first drilling at least one hole in the sleeve and subsequently filling this hole with liquid insulation material. Additional holes for ventilation may also be drilled.

After the foaming process is finished, the holes need to be thoroughly closed and sealed such that e.g. water, dirt or similar substances which could destroy the insulation properties of the insulation material are prevented from entering the insulation material.

One method for closing the holes is to use a conical shaped plug as the ones described in EP2890545A1 or US 4,645,557, where the shape of the hole matches the conical shape of the plug. In US 4,645,557 a special heating tool is used to simultaneously heat the plug and the inside surface of the hole to the same predetermined temperature. Once this temperature is reached, the plug is pushed into the hole thereby creating a welding connection between the plug and the hole. When the plug is inserted correctly into the hole, the hole in the plug is thoroughly closed and sealed. However, since the installation of the plugs is normally done on site by a technician working on a tight schedule, the plug is often not inserted into the hole at the correct angle, as it requires a special tool in order to ensure that the plug enters the hole at the correct angles. Over the years this results in a plug-hole welding connection, which may more easily break at one side of the plug thereby allowing water or other substances to enter the insulation layer below the sleeve and thereby over the years decrease the insulation properties of the pipe.

An improved method is therefore needed to ensure a tight sealing of the holes in the sleeve.

### Description of the invention

Disclosed herein in a ***first aspect*** of the invention is a method for sealing a hole in a sleeve connecting district heating or cooling insulated pipes using a plug, wherein the sleeve has an outer surface and an inner surface, wherein the sleeve is one of the following types:
- a shrink sleeve having a tubular shape for connecting two insulated pipes;
- a T-shaped sleeve for connecting three insulated pipes;
- a T-shaped shrink sleeve for connecting three insulated pipes;
an open joint, which is connected to an end of two insulated pipes by wrapping the joint around the ends of the two insulated pipes such that the joint obtains a tubular shape.

The plug comprises a plug body having round cross-sectional diameters decreasing in size from a first end of the plug body to a second end of the plug body, and a plug collar with a proximal surface and a distal surface opposite the proximal surface, wherein the plug body extends from the distal surface of the collar and has the largest cross-sectional diameter nearest the plug collar.

The method comprises the steps of:
a) providing the plug and providing the sleeve with the hole;
b) heating at least a first sealing surface of the plug and walls of the hole to a pre-determined temperature;
c) inserting the plug in the hole such that the plug collar connects to the outer surface of the sleeve surrounding the hole and such that the plug body fits in the hole in the sleeve, thereby creating a sealing connection, preferably by welding, between (i) the distal side of the plug collar and the surface around the hole, and (ii) the walls of the hole and the first sealing surface of the conical plug body.

The hole in the sleeve is either conical in shape with a smaller diameter at the inner surface than at the outer surface of the hole prior to step a), or made conical with a smaller diameter at the inner surface than at the outer surface of the hole during the heating of the hole in step b).

Disclosed herein in a ***second aspect*** of the invention is a system comprising a joint wherein the joint comprises at least one position suitable for drilling a conical hole or position where a conical hole has been drilled, the joint being for connecting insulated pipes, wherein the joint is one of the following types:
∘ a shrink sleeve having a tubular shape for connecting two insulated pipes;
∘ a T-shaped sleeve for connecting three insulated pipes;
∘ a T-shaped shrink sleeve for connecting three insulated pipes;
∘ an open joint, which is connected to an end of two insulated pipes by wrapping the joint around the ends of the two insulated pipes such that the joint obtains a tubular shape.

The system also comprises at least one plug for closing at least one conical hole in the joint. The at least one plug comprises a plug body having round cross-sectional diameters decreasing in size from a first end of the plug body to a second end of the plug body, and a plug collar with a proximal surface and a distal surface opposite the proximal surface, wherein the plug body extends from the distal surface of the collar and has the largest cross-sectional diameter nearest the plug collar, wherein the at least one plug is made from a material being directly weldable in at least one conical hole in the joint when the at least one plug and the walls of at least one conical hole are heated to a pre-determined temperature.

Disclosed herein in a ***third aspect*** of the invention is the use of a plug for sealing a conical hole defined in a sleeve connecting district heating or cooling insulated pipes, the sleeve being made from non-cross-linked or cross-linked polyethylene or polypropylene, wherein the sleeve is one of the following types
- a shrink sleeve having a tubular shape for connecting two insulated pipes;
- a T-shaped sleeve for connecting three insulated pipes;
- a T-shaped shrink sleeve for connecting three insulated pipes;
- an open joint, which is connected to an end of two insulated pipes by wrapping the joint around the ends of the two insulated pipes such that the joint obtains a tubular shape.

The plug comprises a plug body having round cross-sectional diameters decreasing in size from a first end of the plug body to a second end of the plug body, and a plug collar with a proximal surface and a distal surface opposite the proximal surface, wherein the plug body extends from the distal surface of the plug collar and has the largest cross-sectional diameter nearest the plug collar, wherein the plug is made from a material being directly weldable in the sleeve conical hole when the plug and the conical hole in the sleeve are heated to a pre-determined temperature.

When reference to a sleeve or joint is made in any of the above aspects of the invention, it should be understood to also include sleeves of different shapes and sizes along with wraps and/or any other type of open joint. The terms are thus interchangeable.

By applying the method of the first aspect of the invention, the system of the second aspect of the invention and the use of a plug of the third aspect of the invention, a significant improvement in the sealing of the hole in the sleeve is obtained as the plug collar on the plug ensures that the plug is not inserted in the hole at a tilted angle resulting in a weak sealing at one side of the plug.

Further, as the surface areas on both the sleeve and the plug which can be welded together are further significantly increased by the plug collar on the plug this not only ensures the improved sealing; the lifetime of the whole sleeve is also prolonged. This also increases the lifetime of the insulated pipes which are connected by the sleeve, since the improved sealing of the hole in the sleeve prevents that water and water vapour obtain access to the insulation layer in the insulated pipe.

Also, the distal surface of the collar not connected to the plug body facilitates an additional welding surface on the plug, which is welded to the outer surface of the sleeve surrounding the hole. This creates a significantly better sealing between the plug and the sleeve. The large increase of the welding surface area is especially advantageous in thin walled sleeves - typically smaller sleeves - where the welding area may be increased by 50-150 % by using the plug according to this invention.

Advantageously, the plug according to the invention is not sensitive to an installation where the plug is inserted into the hole at a slightly twisted angle, since the surface area for welding is increased significantly by the addition of the plug collar to the plug. In fact, due to the collar, the positioning of the plug in the sleeve will normally be very well defined such that twisted angle insertion is basically avoided.

Also, due to the plug collar, the plug cannot be pushed through the plug hole as can be seen on the prior art solutions used today. This ensures a high level of reproducibility. It further minimizes the human/installer-induced insecurities during the installation.

The plug can advantageously be installed in both cross-linked and non-cross-linked sleeves.

Also disclosed herein a further system for sealing a hole in a sleeve for connecting insulated pipes, the system comprising a plug according to the above and a flat patch being larger than the plug collar, wherein, upon heating the patch to a predetermined welding temperature and positioning the patch on top of the plug sealed in the hole in the sleeve, the patch is welded onto the proximal surface of the plug collar and part of the sleeve with which the patch is in contact.

The additional flat patch provides for a double sealing of the connection making the connection even more strong than the sealing, which the plug according to the invention already provides for. Furthermore it adds redundancy in the seal.

Also disclosed herein is a drilling tool for drilling a hole in a sleeve for connecting insulated pipes. The drilling tool comprises a drilling tool body having round cross-sectional diameters decreasing in size from a first end of the drilling tool body to a second end of the drilling tool body; a drilling tool collar with a proximal surface and a distal surface opposite the proximal surface, wherein the drilling tool body extends from the distal surface of the collar and has the largest cross-sectional diameter nearest the drilling tool collar, and a connection protrusion for connecting the drilling tool to a drilling machine.

The drilling tool body comprises cutters for drilling a hole in the sleeve and wherein the distal surface of the drilling tool collar comprises one or more rows of surface grinders for obtaining a recess in the sleeve surface surrounding the hole.

The drilling tool can advantageously be used in commercially available drilling machines. The drilling tool ensures that the depth of the hole drilled in the sleeve is correct and not too deep as observed with equipment commercially available today. Also, the drilling tool allows for drilling of the hole and the recess at the same time.

Also disclosed herein is a plug heating tool for heating a welding plug for sealing a conical hole in a sleeve during sealing of a sleeve connecting insulated pipes.

The plug comprises a plug body having round cross-sectional diameters decreasing in size from a first end of the plug body to a second end of the plug body, and a plug collar with a proximal surface and a distal surface opposite the proximal surface, wherein the plug body extends from the distal surface of the collar and has the largest cross-sectional diameter nearest the plug collar.

The plug heating tool comprises a first conically shaped heating surface for abutting and heating the surface of the plug body; a collar heating surface for abutting the distal surface of the collar and heating means for heating surfaces of the heating tool to a predetermined temperature, wherein the angle between the first heating surface and the collar heating surface is larger than 180°.

### Brief description of the drawings

Figure 1 shows a plug according the known prior art.
Figures 2a-b show an embodiment of a plug according to the invention alone (figure 2a) and inserted in a hole in a sleeve (figure 2b).
Figures 3a-c show an embodiment of the plug viewed from different angles.
Figures 4a-c show different shapes of the plug collar seen in a top-view.
Figures 5a-b show plugs with square and rectangular shaped collars.
Figure 6a-e show different types of sleeves.
Figure 7 shows the procedure of drilling a hole in the sleeve for e.g. filing the annular space below the sleeve with insulation material.
Figure 8 shows a drilling tool for drilling a hole in a sleeve.
Figure 9 shows a plug heating tool.
Figure 10 shows a plug pressing tool.

### Description of preferred embodiments

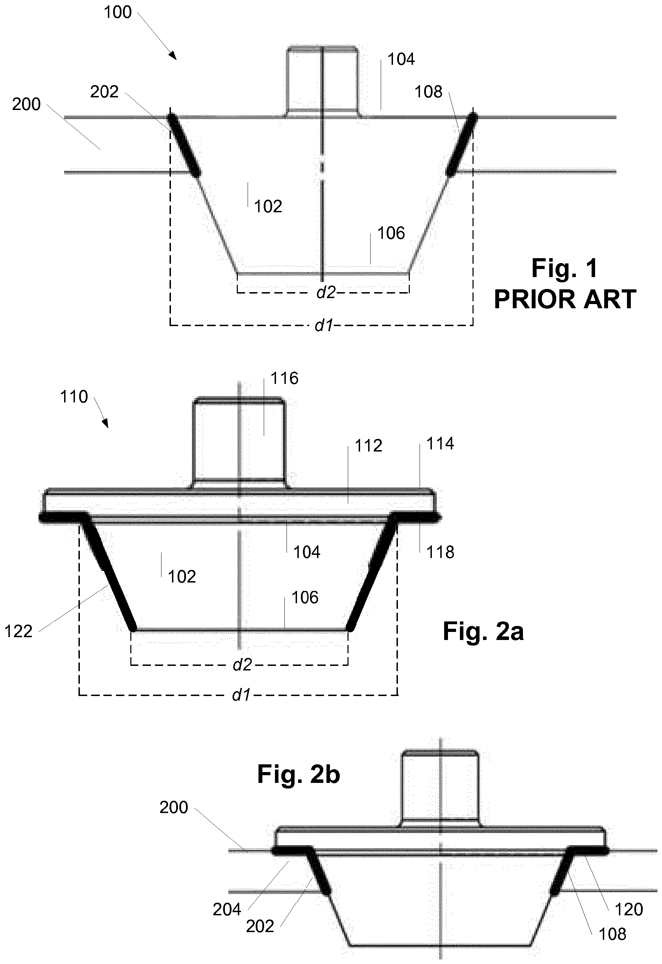

Figure 1 shows a prior art plug 100 similar to the one in e.g. US4,645,557 inserted in a hole 202 in a sleeve 200. The prior art plug 100 comprises a conical plug body 102 extending from a first end 104 to a second end 106 of the plug. The cross-sectional diameter d1 at the first end 104 of the plug body is larger than the cross-sectional diameter d2 at the second end 106 of the plug body. When the plug 100 is inserted into a hole 202 in a sleeve 200, a first welding surface area 108 - sealing the plug body 102 inside the hole 202 - can be defined.

Disclosed herein is a use of a plug for sealing a hole in a sleeve connecting insulated pipes, the sleeve being made from non-cross-linked or cross-linked polyethylene or polypropylene.

The plug comprises a plug body having round cross-sectional diameters decreasing in size from a first end of the plug body to a second end of the plug body, and a plug collar with a proximal surface and a distal surface opposite the proximal surface, wherein the plug body extends from the distal surface of the collar and has the largest cross-sectional diameter nearest the plug collar, wherein the plug is made from a material being directly weldable in the sleeve hole when the plug and the hole in the sleeve are heated to a pre-determined temperature.

In one or more embodiments, the plug body is conical or frustroconical.

In one or more embodiments, the plug body has a smooth surface without perforations or protrusions.

In one or more embodiments, the plug body surface and the distal surface of the collar form an angle larger than 90 degrees.

In one or more embodiments, the plug is made from polyethylene or polypropylene.

In one or more embodiments, the smallest cross-sectional diameter of the plug body is between 18-26 mm, or between 25-30 mm, or between 30-35 mm.

In one or more embodiments, the largest cross-sectional diameter of the plug body is between 22-30 mm, or between 28-37 mm, or between 35-45 mm.

In one or more embodiments, the largest cross-sectional diameter is between 15-40%, or between 40-55% larger than the smallest cross-sectional diameter. In one or more embodiments, the largest cross-sectional diameter is between 5-50%, or between 30-50% larger than the smallest cross-sectional diameter.

In one or more embodiments, the collar has a thickness between 1-5 mm, or between 2, 5-4 mm, or between 2-3 mm, or 2.5 mm.

In one or more embodiments, the plug collar has an improved flexibility compared to the plug body being rigid.

In one or more embodiments, the plug collar bends downwards along an axis such that when the plug is welded in the hole, the collar follows the contour of the round sleeve.

In one or more embodiments, the plug further comprises a top protrusion extending from the proximal surface of the plug collar, preferably positioned symmetrically in relation to the plug collar, wherein the top protrusion is adapted for easy handling of the plug.

In one or more embodiments, the plug collar is circular in shape, or oval in shape, or rectangular in shape. A square shape may also be used.

In one or more embodiments, the plug collar is circular in shape and has a diameter between 2-8 cm, or between 3-6 cm, or between 5-8 cm, or between 3-5 cm, or between 3.5-4.5 cm or at 4 cm.

In one or more embodiments, the plug collar is oval having a major axis defining the largest diameter of the plug collar and a minor axis defining the smallest diameter of the plug collar, wherein when the plug is welded in the hole in the sleeve, the major axis is extending in the longitudinal direction of the sleeve.

In one or more embodiments, the plug comprises a centre axis extending along the first end of the plug to the second end of the plug, and wherein the plug body, the top protrusion, and possibly the plug collar are symmetric around the centre axis.

Figure 2a shows an embodiment of a plug 110 according to the invention. Figure 2b shows the plug of figure 2a inserted in a hole 202 in a sleeve 200. The plug 110 contains a conical plug body 102 as also seen in the prior art plug 100 in figure 1, and additionally contains a plug collar 112. The description and the numerals of the plug body of the prior art plug in figure 2a also apply to the plug body shown in figure 2b.

The plug collar 112 has a proximal surface114 pointing towards a viewer when the plug 102 is inserted in the hole 202 in the sleeve 200. Extending from the proximal surface 114 of the plug collar 112 is a top protrusion 116, which facilitates easy handling of the plug 110 when using it for sealing the hole 202 in the sleeve 200.

In one or more embodiments, the plug collar has a thickness between 1-5 cm, or between 1.5-4 cm, or between 2-3 mm, or 2.5 cm.

On the opposite side of the proximal surface 114 of the plug collar 112 is an exposed distal surface 118 which comes in contact with the surface of the sleeve 200 surrounding the hole 202, when the plug 110 is inserted in the hole 202 in the sleeve 200. The plug body 102 is extending form the distal surface 118 with the largest cross-sectional diameter *d1* of the plug body 102 being closest to the plug collar 112.

When the plug 110 is inserted into a hole 202 in a sleeve 200, a second welding surface area 120 - sealing the plug collar 112 to the surface 204 of the sleeve surrounding the hole 202 - can be defined in addition to the first welding surface 108.

Normally, the outer surface 122 of the plug body 102 is smooth without any protrusions or recesses.

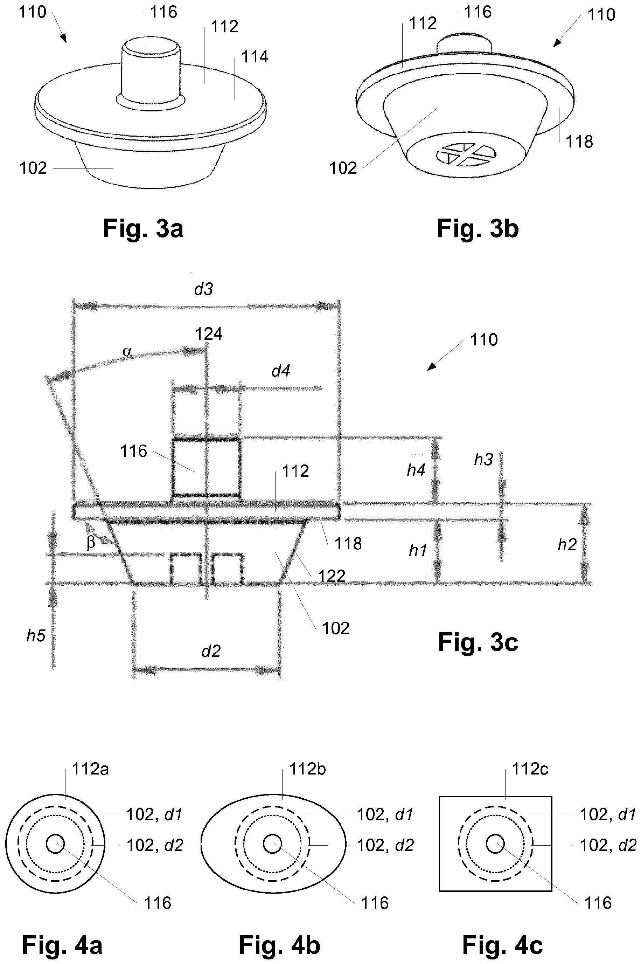

In figures 3a-c are shown different views of an embodiment of the plug 110, where figure 3a is a perspective view of the plug 110 seen primarily from above, figure 3b is a perspective view of the plug 110 seen primarily from below, and figure 3c is a side view of the plug 110.

In figure 3c, the cross-section diameter *d2* of the plug body 102 at the second end of the plug, the cross-section diameter *d3* of the plug collar 112 and the cross-section diameter *d4* of the top protrusion 116 are marked. Figure 3c also shows a marking of the height *h1* of the plug body 102, the height *h2* of the plug 110, the height/thickness *h3* of the plug collar 112 and the height *h4* of the top protrusion 116.

In one or more embodiments, the smallest cross-sectional diameter *d2* of the plug body is between 18-26 mm, or between 25-30 mm, or between 30-35 mm.

In one or more embodiments, the largest cross-sectional diameter *d1* of the plug body is between 22-30 mm, or between 28-37 mm, or between 35-45 mm.

From the first end of the plug to the second end of the plug is an axis 124 through the centre of the plug. The angle between the outer surface 122 of the plug body and the axis 124 is marked α. In one or more embodiments, the angle α is between 10-30 degrees, or between 15-25 degrees, or between 21-23 degrees, or substantially 22.5 degrees.

The angle between the distal surface 118 of the plug collar and the surface of the plug body is marked β in figure 3c. The angle β is in one or more embodiments larger than 90 degrees, or between 100-120 degrees, or between 105-115 degrees, or between 111-113 degrees, or substantially 112.5 degrees.

In figure 3b-c it can also be seen that the plug 110 may comprise a recess 126 at the bottom of distal side 128 of the plug body 102. The recess 126 lowers the use of material.

Figures 4a-c show plugs with different shapes of the plug collar 112 seen in a top-view. The cross-section diameters *d1*, *d2* of the plug body 102 at the first end and the second end of the plug body, respectively, along with the top protrusion 116 are marked in figures 4a-c. The plug collar 112a in figure 4a is round in shape, whereas the plug collar 112b in figure 4b is oval and the plug collar 112c in figure 4c is rectangular in shape. Other shapes, such as e.g. rectangular, pentagonal and hexagonal, may also be imagined.

In one or more embodiments, the plug collar is circular in shape or oval in shape or square in shape.

In one or more embodiments, the plug collar is circular in shape and has a diameter between 2-8 cm, or between 3-6 cm, or between 5-8 cm, or between 3-5 cm, or between 3.5-4.5 cm or at 4 cm.

In one or more embodiments, the plug collar is oval having a major axis defining the largest diameter of the plug collar and a minor axis defining the smallest diameter of the plug collar, wherein when the plug is welded in the hole in the sleeve, the major axis is extending in the longitudinal direction of the sleeve.

In one or more embodiments, the plug collar bends downwards along an axis such that when the plug is welded in the hole, the plug collar follows the contour of the round sleeve.

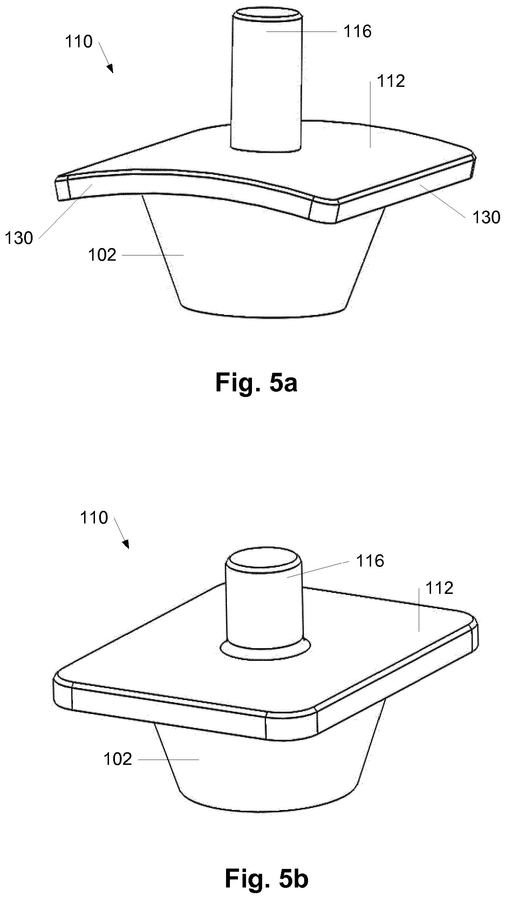

Figures 5a-b show plugs 110 with rectangular-shaped collars 112. In figure 5a, the plug collar 112 bends downwards on two opposite sides 130 of the plug body 102 such that the plug collar 112 may follow the contours of the round sleeve with the hole into which the plug is inserted. In figure 5b, the plug collar 112 does not bend.

The bended plug collar in figure 5a is rectangular in shape. The bending of the plug collar to follow the contour of the sleeve may also be found for round, oval or any other types of collar shapes.

In one or more embodiments, the plug collar has an improved flexibility compared to the plug body being rigid. This allows the plug collar to more easily bend and be welded to the sleeve, which has a round contour in the transverse direction.

The relation between the hole diameter and the plug collar area may have multiple combinations and in principle only depends on the welding tools at disposal.

Also disclosed herein is a system comprising a plug 110 according to the above and a flat patch (not shown in the figures) being larger than the plug collar. Upon heating the patch to a predetermined welding temperature and positioning the patch on top of the plug sealed in the hole in the sleeve, the patch is welded onto the proximal surface of the plug collar and part of the sleeve with which the patch is in contact.

In one or more embodiments, the patch is made from polyethylene, or polypropylene.

In one or more embodiments, the system further comprises a sleeve according to the above for connecting insulated pipes, the sleeve comprising at least one conical hole.

Disclosed herein is also a system comprising a joint in the form of a sleeve or a wrap, the joint being for connecting insulated pipes, and at least one plug for closing at least one conical hole in the joint.

When reference to a sleeve is made, it should be understood to also include a wrap or any other type of open joint.

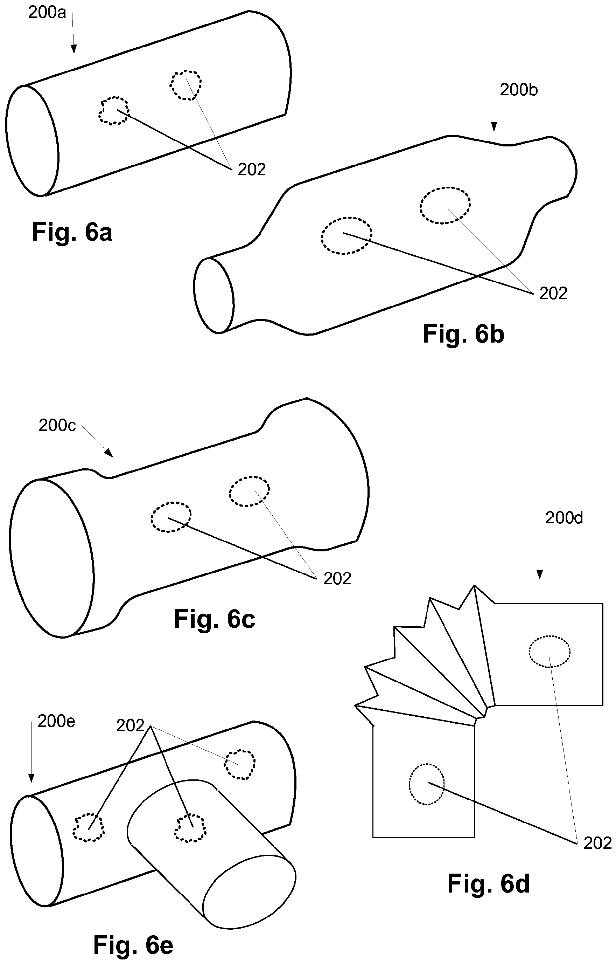

The at least one plug is a plug according to the above description exemplified by the plugs shown in the figures. The sleeve may be a sleeve according to any of the sleeves shown in figure 6a-e. The figures show different types of sleeves 200a-200e all containing two or more positions suitable for drilling holes in the sleeves or positions where a hole has been drilled. One hole or a larger multiple of holes may also be imagined.

In one or more embodiments, the hole in the joint is surrounded by a recess, thereby creating a deepening surface area around the hole wherein the plug collar fits when inserting the plug in the hole.

In one or more embodiments, the hole in the joint is a foaming hole through which liquid insulation material can be added to fill the annular space between the insulated pipes, or an air ventilation hole used during a foaming process for foaming of the annular space between the insulated pipes.

According to the invention, the joint is one of the following types:
- a shrink sleeve having a tubular shape for connecting two insulated pipes;
- a T-shaped sleeve for connecting three insulated pipes;
- a T-shaped shrink sleeve for connecting three insulated pipes;
- an open joint, which is connected to an end of two insulated pipes by wrapping the joint around the ends of the two insulated pipes such that the joint obtains a tubular shape.

In one or more embodiments, the joint is made from a non-cross-linked and/or a cross-linked plastic material allowing the joint to shrink onto the insulated pipes upon being heated.

In one or more embodiments, the joint and the plug are made from polyethylene, cross-linked polyethylene, polypropylene or cross-linked polypropylene. Normally, the plug is not cross-linked.

Disclosed herein is further a method for sealing a hole in a sleeve connecting insulated pipes using a plug. The method comprises the steps of:
a) providing the plug and the sleeve with the hole;
b) heating at least a first sealing surface of the plug and walls of the hole to a pre-determined temperature;
c) inserting the plug in the hole such that the plug collar connects to the outer surface of the sleeve surrounding the hole and such that the plug body fits in the hole in the sleeve, thereby creating a sealing connection, preferably by welding, between (i) the distal side of the plug collar and the surface around the hole, and (ii) the walls of the hole and the first sealing surface of the conical plug body.

The hole in the sleeve is either conical in shape with a smaller diameter at the inner surface than at the outer surface of the hole prior to step a), or made conical with a smaller diameter at the inner surface than at the outer surface of the hole during the heating of the hole in step b).

Normally, the hole in the sleeve has an inner surface diameter where the hole penetrates the inner surface of the sleeve and an outer surface diameter at the outer surface of the sleeve, the outer surface diameter being larger than the inner surface diameter.

The hole may in an embodiment be drilled circular with the same inside and outside diameter and then later be melted conical with the welding mirror.

In one or more embodiments, the hole in the sleeve is surrounded by a recess, thereby creating a deepening surface area around the hole wherein the plug collar fits when inserting the plug in the hole.

In one or more embodiments, the recess in the sleeve has a shape matching that of the plug collar.

In one or more embodiments, the recess extends to a depth being at the most the same as the thickness of the plug collar, wherein the thickness of the plug collar is smaller than the thickness of the joint surrounding the hole.

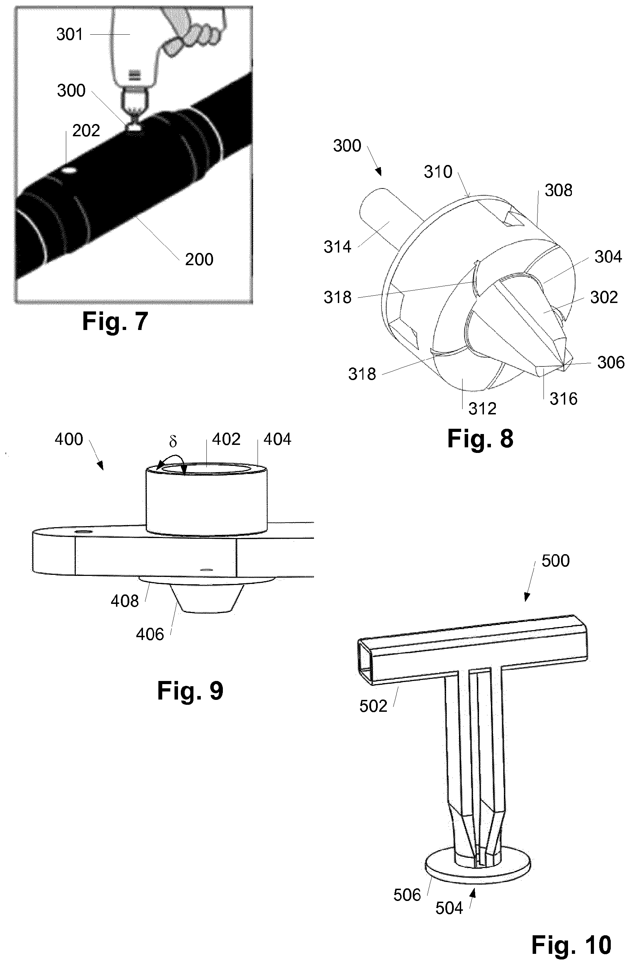

In one or more embodiments, a heating tool is used for heating at least the first sealing surface of the plug and the walls of the hole in the sleeve to the predetermined temperature. An example of a heating tool is shown in figure 9. The heating walls of the hole in the sleeve and the welding surfaces of the plug body are heated to the pre-determined temperature.

In one or more embodiments, the pre-determined temperature is between 230-270°C thereby facilitating welding between sealing surfaces of the plug and the walls of the hole and possibly the sleeve surface surrounding the hole.

In one or more embodiments, the pre-determined temperature is between 240-260°C.

In one or more embodiments, the pre-determined temperature is approximately 250°C.

In one or more embodiments, only the first sealing surface of the plug body and the walls of the hole are heated.

In one or more embodiments, an adhesive is applied around the hole and/or on the exposed distal surface of the plug before inserting the plug in the hole.

In one or more embodiments, inserting the plug in the hole is done by the sub-steps of (1) providing a plug pressing tool, (2) arranging the plug body into the hole after heating, and (3) pressing the plug collar against an outer surface of the sleeve by means of the plug pressing tool so as to provide a welding between the distal side of the plug collar and the outer surface of the sleeve around the hole and the walls of the hole and the first sealing surface of the plug body.

An example of the plug pressing tool is shown in figure 10. The plug pressing tool comprises a collar support part for supporting the proximal surface of the plug collar, wherein the plug collar support part has a width which is larger than the width of the plug body.

In one or more embodiments, the method comprises the step of pressing the plug into the hole with a force of 1-3 N/mm² for 30-90 seconds.

In one or more embodiments, the plug collar and the outer surface of the sleeve are heated to the predetermined temperature, and wherein the pressing of the plug collar against an outer surface of the sleeve by means of the plug pressing tool provides a welding between the distal surface of the plug collar and the outer surface of the sleeve surrounding the hole.

In one or more embodiments, the plug body surface and the distal surface of the plug collar form an obtuse angle between the plug collar and the surface of the plug body.

In one or more embodiments, where the sleeve is made from a cross-linked plastic material, the walls of the hole in the cross-linked material sleeve are pre-heated before heating the first sealing surface of the plug and the walls of the hole. This ensures that the cross-linked material reaches the required temperature allowing it to be welded to the non-cross-linked material of the plug.

In one or more embodiments, the method for sealing the hole in the sleeve further comprises the steps of:
- providing a flat patch being larger than the plug collar;
- heating the patch to a predetermined welding temperature;
- positioning the patch on top of the plug sealed in the hole in the sleeve such that the patch covers the plug collar completely and such that the patch is welded onto the plug collar and part of the sleeve with which the patch is in contact.

In one or more embodiments, the patch is made from polyethylene or polypropylene.

Figure 7 shows the procedure of drilling hole(s) in the sleeve. In one or more embodiments, the hole in the sleeve is a foaming hole through which liquid insulation material can be added to fill the annular space between the insulated pipe or an air ventilation hole used during a foaming process for foaming of the annular space between the insulated pipe.

Disclosed herein is therefore also a drilling tool for drilling a hole in a sleeve for connecting insulated pipes. The drilling tool comprises a drilling tool body having round cross-sectional diameters decreasing in size from a first end of the drilling tool body to a second end of the drilling tool body; a drilling tool collar with a proximal surface and a distal surface opposite the proximal surface, wherein the drilling tool body extends from the distal surface of the collar and has the largest cross-sectional diameter nearest the drilling tool collar and a connection protrusion for connecting the drilling tool to a drilling machine.

The drilling tool body comprises cutters for drilling a hole in the sleeve and wherein the distal surface of the drilling tool collar comprises one or more rows of surface grinders for obtaining a recess in the sleeve surface surrounding the hole.

The drilling tool body may be conical.

The drilling tool body surface and the distal surface of the drilling tool collar may form an angle larger than 90 degrees.

The drilling machine 301 shown in figure 7 is a standard drilling machine where onto a drilling tool 300 is attached. Figure 8 shows a close-up of the drilling tool 300, which comprises a drilling tool body 302 with round cross-sectional diameters decreasing in size from a first end 304 of the drilling tool body 302 to a second end 306 of the drilling tool body 302. Like the plug shown in some of the preceding figures, the drilling tool also comprises a drilling tool collar 308, which has a proximal surface 310 and a distal surface 312 from where the drilling tool body 302 extends.

The drilling tool 300 has a connection protrusion 314 for connecting the drilling tool 300 to a drilling machine 301. The drilling tool body 302 comprises cutters 316 for drilling the hole in the sleeve. Also on the distal surface 312 of the drilling tool, the collar 308 comprises one or more rows of surface grinders 318 for obtaining a recess in the sleeve surface surrounding the hole when drilling the hole in the sleeve.

The drilling tool 300 with the surface grinders 318 may also have a built in stop, which can be used in order to optimize the contact area of the plug in the wall thickness area of the sleeve. The drilling tool may further optimize the preparation of the sleeve surface for welding and secure the right hole geometry.

The current welding tools which are on the market may be used with a new adaptor.

Disclosed herein is further a plug heating tool for heating a welding plug for sealing a conical hole in a sleeve during sealing of a sleeve connecting insulated pipes.

The plug comprises a plug body having round cross-sectional diameters decreasing in size from a first end of the plug body to a second end of the plug body and a plug collar with a proximal surface and a distal surface opposite the proximal surface, wherein the plug body extends from the distal surface of the plug collar and has the largest cross-sectional diameter nearest the plug collar.

The plug heating tool comprises a first conically shaped heating surface for abutting and heating the surface of the plug body; a collar heating surface for abutting the distal surface of the collar; and heating means for heating surfaces of the heating tool to a predetermined temperature, wherein the angle between the first heating surface and the collar heating surface is larger than 180°.

Figure 9 shows an example of a plug heating tool 400 for heating a plug according to any of the shown embodiments in figures 2-5. The plug heating tool 400 comprises a first conically shaped heating surface 402 for abutting and heating the outer surface of the plug body and a collar heating surface 404 for abutting the distal surface of the collar. The first conically shaped heating surface 402 forms a conical receiving hole for receiving a conical plug body of a welding plug. The collar heating surface 404 substantially surrounds the receiving opening of the conical receiving hole.

The angle δ between the first heating surface 402 and the collar heating surface 404 is normally larger than 180°.The angle δ may be between 210° and 265°, such as substantially 250°.

The collar heating surface may have an annular shape and it may also be recessed.

The plug heating tool 400 also has a conically shaped outer heating surface 406 for heating the walls of the hole in the sleeve, e.g. a sleeve as shown in figures 6a-e.

The conically shaped outer heating surface 406 comprises an annular recess 408 providing a heating surface for heating the outer surface of the sleeve surrounding the hole in the sleeve.

The first conically shaped heating surface may form a conical receiving hole for receiving a conical plug body of a welding plug, wherein the receiving hole has a receiving opening substantially providing the largest cross sectional diameter of the conical receiving hole.

The collar heating surface may substantially surround the receiving opening of the conical receiving hole.

The angle between the first heating surface and the collar heating surface may be between 210° and 265°, such as substantially 250°.

The collar heating surface may have an annular shape.

The collar heating surface may be recessed.

The plug heating tool may comprise a further, conically shaped outer heating surface for heating the surface of the conical hole in the sleeve.

The further, conically shaped outer heating surface may comprise an annular protrusion providing a heating surface for heating the outer surface of the sleeve surrounding the conical hole in the sleeve.

Disclosed herein is also the use of a plug heating tool according to the above for heating a welding plug and a hole in a sleeve, the plug comprising:
- a plug body having round cross-sectional diameters decreasing in size from a first end of the plug body to a second end of the plug body, and
- a plug collar with a proximal surface and a distal surface opposite the proximal surface, wherein the plug body extends from the distal surface of the plug collar and has the largest cross-sectional diameter nearest the plug collar,
wherein the heating tool heats the plug body and the plug collar.

Figure 10 shows a plug pressing tool 500 for holding a plug during the step of pressing the plug into the hole in the sleeve. The plug pressing tool 500 has a handle 502, which the user uses when holding the tool 500 and pressing the plug into the hole in the sleeve.

The top protrusion of the plug will normally extend into a recess 504 in the plug pressing tool 500 during the pressing of the plug collar against the outer surface of the sleeve. The plug pressing tool 500 also has a collar pressing surface 506 for pressing the collar of the plug collar against the outer surface of the sleeve.

The collar support part of the plug pressing tool may have a support surface for supporting on the proximal surface of the plug collar, and wherein the support surface preferably has a surface contour, such as an arched surface contour, substantially corresponding to the surface contour of the sleeve.

The plug pressing tool may comprise a handle for holding the plug pressing tool by hand during the pressing operation.

A top protrusion may extend from the proximal surface of the collar, wherein the plug is arranged so that the top protrusion extends into a recess in the pressing tool during the pressing of the collar against the outer surface of the sleeve.

### References

- 100: prior art plug
- 102: plug body
- 104: first end of the plug
- 106: second end of the plug
- 108: first welding surface area
- 110: plug according to the invention
- 112: plug collar
- 114: proximal surface of the plug collar
- 116: top protrusion
- 118: distal surface of the plug collar
- 120: second welding surface area
- 122: outer surface of the plug body
- 124: axis from the first end of the plug to the second end of the plug
- 126: recess at the distal side of the plug body
- 128: distal side of the plug body
- 130: downwards-bending sides on the plug collar

- *d1*: cross-section diameter of the plug body at the first end of the plug body
- *d2*: cross-section diameter of the plug body at the second end of the plug body
- *d3*: cross-section diameter of the plug collar
- *d4*: cross-section diameter of the top protrusion
- *h1*: height of the plug body
- *h2*: height of the plug
- *h3*: height/thickness of the plug collar
- *h4*: height of the top protrusion
- α: angle between the surface of the plug body and the axis 124
- β: angle between the distal surface of the plug collar and the surface of the plug body

- 200: sleeve
- 202: hole in the sleeve
- 204: surface surrounding the hole in the sleeve
- 300: drilling tool
- 301: drilling machine
- 302: drilling tool body
- 304: first end of the drilling tool body
- 306: second end of the drilling tool body
- 308: drilling tool collar
- 310: proximal surface of the drilling tool collar
- 312: distal surface of the drilling tool collar
- 314: connection protrusion
- 316: cutters
- 318: surface grinders

- 400: plug heating tool
- 402: first conically shaped heating surface
- 404: collar heating surface
- 406: conically shaped outer heating surface
- 408: annular protrusion
- δ: angle between the first heating surface and the collar heating surface

- 500: plug pressing tool
- 502: handle

## Claims

1. A system comprising:
• a joint (200) , wherein the joint (200) comprises at least one position suitable for drilling a conical hole or position where a conical hole has been drilled, the joint being adapted for connecting district heating or cooling insulated pipes, wherein the joint is one of the following types:
∘ a shrink sleeve having a tubular shape for connecting two insulated pipes;
∘ a T-shaped sleeve for connecting three insulated pipes;
∘ a T-shaped shrink sleeve for connecting three insulated pipes;
∘ an open joint, which is connected to an end of two insulated pipes by wrapping the joint around the ends of the two insulated pipes such that the joint obtains a tubular shape, and
• at least one plug (110) for closing at least one conical hole (202) in the joint, wherein the at least one plug comprises:
- a plug body (102) having round cross-sectional diameters decreasing in size from a first end of the plug body (104) to a second end of the plug body (106), and
- a plug collar (112) with a proximal surface (114) and a distal surface (118) opposite the proximal surface, wherein the plug body extends from the distal surface of the collar and has the largest cross-sectional diameter nearest the plug collar, and
wherein the at least one plug (110) is made from a material being directly weldable in at least one conical hole (202) in the joint (200) when the at least one plug (110) and the walls of at least one conical hole (202) are heated to a pre-determined temperature.

2. A system according to Claim 1, wherein the joint has a conical hole defined therein.

3. A system according to Claim 2, wherein the conical hole in the joint is surrounded by a recess, thereby creating a deepening surface area around the conical hole (202) wherein the plug collar (112) fits when inserting the plug in the conical hole (202).

4. A system according to any preceding claim, wherein the joint (200) is made from a non-cross-linked and/or a cross-linked plastic material, such as e.g. polyethylene, cross-linked polyethylene, polypropylene or cross-linked polypropylene, allowing the joint (200) to shrink onto the insulated pipes upon being heated.

5. A system according to any preceding claim, wherein the largest cross-sectional diameter of the plug body (102) is between 15-40%, or between 40-55% larger than the smallest cross-sectional diameter of the plug body.

6. A system according to any preceding claim, wherein the plug (110) further comprises a top protrusion (116) extending from the proximal surface of the plug collar (112), preferably positioned symmetrically in relation to the plug collar (112), wherein the top protrusion is adapted for easy handling of the plug (110).

7. A system according to any of the preceding claims 3-6, wherein the recess around the conical hole (202) in the sleeve has a shape matching that of the plug collar (112), wherein the plug collar (112) is circular in shape or oval in shape, and wherein the recess extends to a depth being at the most the same as the thickness of the plug collar (112), wherein the thickness of the plug collar (112) is smaller than the thickness of the joint surrounding the conical hole (202).

8. Use of a plug (110) for sealing a conical hole (202) defined in a sleeve (200) connecting district heating or cooling insulated pipes, wherein the sleeve is one of the following types:
• a shrink sleeve having a tubular shape for connecting two insulated pipes;
• a T-shaped sleeve for connecting three insulated pipes;
• a T-shaped shrink sleeve for connecting three insulated pipes;
• an open joint, which is connected to an end of two insulated pipes by wrapping the joint around the ends of the two insulated pipes such that the joint obtains a tubular shape,
the sleeve being made from non-cross-linked or cross-linked polyethylene or polypropylene, wherein the plug (110) comprises:
- a plug body (102) having round cross-sectional diameters decreasing in size from a first end of the plug body (104) to a second end of the plug body (106), and
- a plug collar (112) with a proximal surface (114) and a distal surface (118) opposite the proximal surface, wherein the plug body extends from the distal surface of the plug collar and has the largest cross-sectional diameter nearest the plug collar,
wherein the plug (110) is made from a material being directly weldable in the sleeve conical hole (202) when the plug (110) and the conical hole (202) in the sleeve are heated to a pre-determined temperature.

9. Use of a plug (110) according to claim 8, wherein the plug body (102) has a smooth surface without perforations or protrusions.

10. Use of a plug (110) according to any of the claims 8-9, wherein the plug body surface and the distal surface of the plug collar (112) form an angle larger than 90 degrees.

11. Use of a plug (110) according to any of the claims 8-10, wherein the plug (110) is made from polyethylene or polypropylene.

12. Use of a plug (110) according to any of the claims 8-11, wherein
- the smallest cross-sectional diameter of the plug body (102) is between 18-26 mm, or between 25-30 mm, or between 30-35 mm, and/or
- the largest cross-sectional diameter of the plug body (102) is between 22-30 mm, or between 28-37 mm, or between 35-45 mm,
- the plug collar (112) has a thickness between 1-5 mm, or between 2.5-4 mm, or between 2-3 mm, or 2.5 mm, and/or
- the largest cross-sectional diameter is between 5-50%, or between 15-40%, or between 30-50%, or between 40-55% larger than the smallest cross-sectional diameter.

13. Use of a plug (110) according to any of the claims 8-12, wherein the plug collar (112) is:
• circular in shape, preferably with a diameter between 2-8 cm, or between 3-6 cm, or between 5-8 cm, or between 3-5 cm, or between 3.5-4.5 cm or at 4 cm, or
• oval in shape, preferably having a major axis defining the largest diameter of the plug collar (112) and a minor axis defining the smallest diameter of the plug collar (112), wherein when the plug is welded in the conical hole (202) in the sleeve, the major axis is extending in the longitudinal direction of the sleeve (200), or
• rectangular in shape; and
wherein the plug collar (112) optionally:
(i) has an improved flexibility compared to the plug body (102) being rigid, and/or
(ii) bends downwards along an axis such that when the plug (110) is welded in the conical hole (202), the plug collar (112) follows the contour of the round sleeve.

14. Use of a plug (110) according to any of the claims 8-13, wherein the plug further comprises a top protrusion extending from the proximal surface of the collar, preferably positioned symmetrically in relation to the plug collar, wherein the top protrusion is adapted for easy handling of the plug.

15. Use of a plug (110) according to any of the claims 8-14, wherein the plug (110) further comprises a flat patch being larger than the plug collar (112), wherein, upon heating the patch to a predetermined welding temperature and positioning the patch on top of the plug sealed in the conical hole (202) in the sleeve (200), the patch is welded onto the proximal surface (114) of the plug collar (112) and part of the sleeve (200) with which the patch is in contact, wherein the patch is preferably made from polyethylene, or polypropylene.

16. Method for sealing a hole (202) in a sleeve (200) connecting district heating or cooling insulated pipes using a plug (110), wherein the sleeve has an outer surface and an inner surface, wherein the sleeve is one of the following types:
• a shrink sleeve having a tubular shape for connecting two insulated pipes;
• a T-shaped sleeve for connecting three insulated pipes;
• a T-shaped shrink sleeve for connecting three insulated pipes;
• an open joint, which is connected to an end of two insulated pipes by wrapping the joint around the ends of the two insulated pipes such that the joint obtains a tubular shape, and
wherein the plug (110) comprises:
- a plug body (102) having round cross-sectional diameters decreasing in size from a first end of the plug body (104) to a second end of the plug body (106), and
- a plug collar (112) with a proximal surface (114) and a distal surface (118) opposite the proximal surface (114), wherein the plug body extends from the distal surface of the collar and has the largest cross-sectional diameter nearest the plug collar,
wherein the method comprises the steps of:
a) providing the plug and providing the sleeve with the hole;
b) heating at least a first sealing surface of the plug and walls of the hole to a pre-determined temperature;
c) inserting the plug (110) in the hole (202) such that the plug collar connects to the outer surface of the sleeve surrounding the hole and such that the plug body fits in the hole in the sleeve, thereby creating a sealing connection, preferably by welding, between:
(i) the distal side of the plug collar and the surface around the hole, and
(ii) the walls of the hole and the first sealing surface of the conical plug body,
wherein the hole (202) is either:
• conical in shape with a smaller diameter at the inner surface than at the outer surface of the hole prior to step a), or
• made conical with a smaller diameter at the inner surface than at the outer surface of the hole during the heating of the hole in step b).

17. Method according to claim 16, wherein the hole (202) in the sleeve (200) is surrounded by a recess, thereby creating a deepening surface area around the hole wherein the plug collar fits when inserting the plug in the hole.

18. Method according to any of the claims 16-17, wherein in step b) a heating tool is used for heating at least the first sealing surface of the plug and the walls of the hole in the sleeve to the pre-determined temperature.

19. Method according to any of the claims 16-18, wherein the pre-determined temperature in step b) is between 230-270°C thereby facilitating welding between the sealing surfaces of the plug and the walls of the hole and possibly the sleeve surface surrounding the hole.

20. Method according to any of the claims 16-19, wherein only the first sealing surface of the plug body and the walls of the hole are heated in step b), and wherein the method further comprises the step of applying an adhesive around the hole and/or on the exposed distal surface of the plug before inserting the plug (110) in the hole (202).

21. Method according to any of the claims 16-20, wherein inserting the plug (110) in the hole (202) in step c) is done by the sub-steps of:
c1) providing a plug pressing tool, optionally comprising a handle for holding the plug pressing tool by hand during the pressing operation;
c2) arranging the plug body (102) into the hole after heating in step b); and
c3) pressing the plug collar (112) against an outer surface of the sleeve by means of the plug pressing tool so as to provide a welding between:
(i) the distal side of the plug collar and the outer surface of the sleeve around the hole, and
(ii) the walls of the hole and the first sealing surface of the plug body.
wherein the plug pressing tool comprises a collar support part for supporting the proximal surface of the collar, wherein the collar support part has a width which is larger than the width of the plug body.

22. Method according to any of the claims 17-21, comprising the step of pressing the plug (110) into the hole (202) with a force of 1-3 N/mm² for 30-90 seconds.

23. Method according to any of the claims 21-22, wherein the collar support part of the plug pressing tool has a support surface for supporting on the proximal surface of the plug collar (112), and wherein the support surface preferably has a surface contour, such as an arched surface contour, substantially corresponding to the surface contour of the sleeve (200).

24. Method according to any of the claims 16-23, wherein the method in step b) heats the plug collar (112) and the outer surface of the sleeve (200) to the predetermined temperature, and wherein the pressing of the plug collar (112) against an outer surface of the sleeve (200) by means of the plug pressing tool provides a welding between the distal surface of the plug collar and the outer surface of the sleeve surrounding the hole (202).

25. Method according to any of the claims 21-24, wherein a top protrusion extends from the proximal surface of the collar, wherein the plug is arranged so that the top protrusion extends into a recess in the pressing tool during the pressing of the plug collar (112) against the outer surface of the sleeve (200).

26. Method according to any of the claims 16-25, wherein the plug (110) and/or the sleeve (200) is/are made from polyethylene, cross-linked polyethylene, polypropylene or cross-linked polypropylene, and/or wherein the walls of the hole in the cross-linked material sleeve is pre-heated before heating the first sealing surface of the plug (110) and the walls of the hole (202) in step b).

27. Method according to any of the claims 16-26, further comprising the steps of:
d) providing a flat patch, made from e.g. polyethylene, or polypropylene, and being larger than the plug collar (112);
e) heating the patch to a predetermined welding temperature;
f) positioning the patch on top of the plug sealed in the hole in the sleeve such that the patch covers the plug collar completely and such that the patch it welded onto the plug collar and part of the sleeve with which the patch is in contact.

## Patentansprüche

1. System, das Folgendes aufweist:
• eine Verbindung (200), wobei die Verbindung (200) zumindest eine Position aufweist, die zum Bohren eines konischen bzw. kegelförmigen Loches geeignet ist, oder eine Position, wo ein konisches Loch gebohrt worden ist, wobei die Verbindung zum Anschluss von isolierten städtischen Heizungs- oder Kühlungsrohren geeignet ist, wobei die Verbindung eine der folgenden Arten ist:
∘ eine Schrumpfhülse mit einer Rohrform zur Verbindung von zwei isolierten Rohren;
∘ eine T-förmige Hülse zur Verbindung von drei isolierten Rohren;
∘ eine T-förmige Schrumpfhülse zur Verbindung von drei isolierten Rohren;
∘ eine offene Verbindung, die mit einem Ende von zwei isolierten Rohren durch Umwickeln der Rohre um die Enden der zwei isolierten Rohre verbunden ist, so dass die Verbindung eine Rohrform erhält, und
• mindestens einen Stopfen (110) zum Schließen des mindestens einen konischen Loches (202) in der Verbindung, wobei der mindestens eine Stopfen Folgendes aufweist:
- einen Stopfenkörper (102) mit Durchmessern mit rundem Querschnitt, die bezüglich der Größe von einem ersten Ende des Stopfenkörpers (104) zu einem zweiten Ende des Stopfenkörpers (106) abnehmen; und
- einen Stopfenbund (112) mit einer vorderen bzw. proximalen Oberfläche (114) und einer hinteren bzw. distalen Oberfläche (118), die entgegengesetzt zur proximalen Oberfläche ist, wobei der Stopfenkörper sich von der distalen Oberfläche des Bundes erstreckt und den größten Querschnittsdurchmesser am nächsten an dem Stopfenbund hat, und
wobei der mindestens eine Stopfen (110) aus einem Material gemacht ist, welches in mindestens einem konischen Loch (202) in der Verbindung (200) schweißbar ist, wenn der mindestens eine Stopfen (110) und die Wände des mindestens einen konischen Lochs (202) auf eine vorbestimmte Temperatur erwärmt sind.

2. System nach Anspruch 1, wobei die Verbindung ein konisches Loch hat, das darin definiert ist.

3. System nach Anspruch 2, wobei das konische Loch in der Verbindung von einer Vertiefung umgeben ist, wodurch ein sich vertiefender Oberflächenbereich um das konische Loch (202) erzeugt wird, wobei der Stopfenbund (112) beim Einführen des Stopfens in das konische Loch (202) passt.

4. System nach einem vorhergehenden Anspruch, wobei die Verbindung (200) aus einem nicht-quervernetzten und/oder einem quervernetzten Plastikmaterial gemacht ist, wie beispielsweise Polyäthylen, quervernetztem Polyäthylen, Polypropylen oder quervernetztem Polypropylen, was gestattet, dass die Verbindung (200) auf die isolierten Rohre schrumpft, wenn sie erwärmt wird.

5. System nach einem vorhergehenden Anspruch, wobei der größte Querschnittsdurchmesser des Stopfenkörpers (102) zwischen 15-40% oder zwischen 40-55% größer ist als der kleinste Querschnittsdurchmesser des Stopfenkörpers.

6. System nach einem vorhergehenden Anspruch, wobei der Stopfen (110) weiter einen oberen Vorsprung (116) aufweist, der sich von der proximalen Oberfläche des Stopfenbundes (112) erstreckt, vorzugsweise symmetrisch bezüglich des Stopfenbundes (112) positioniert, wobei der obere Vorsprung zur einfachen Handhabung des Stopfens (110) ausgebildet ist.

7. System nach einem der vorhergehenden Ansprüche 3-6, wobei die Vertiefung um das konische Loch (202) in der Hülse eine Form hat, die zu jener des Stopfenbundes (112) passt, wobei der Stopfenbund (112) kreisförmig oder oval geformt ist, und wobei die Vertiefung sich zu einer Tiefe erstreckt, die höchstens die gleiche ist wie die Dicke des Stopfenbundes (112), wobei die Dicke des Stopfenbundes (112) kleiner ist als die Dicke der Verbindung, die das konische Loch (202) umgibt.

8. Verwendung eines Stopfens (110) zur Abdichtung eines konischen Lochs (202), das in einer Hülse (200) definiert ist, die isolierte städtische Heizungs- oder Kühlungsrohre verbindet, wobei die Hülse eine der folgenden Arten ist:
• eine Schrumpfhülse mit einer Rohrform zur Verbindung von zwei isolierten Rohren;
• eine T-förmige Hülse zur Verbindung von drei isolierten Rohren;
• eine T-förmige Schrumpfhülse zur Verbindung von drei isolierten Rohren;
• eine offene Verbindung, die mit einem Ende von zwei isolierten Rohren durch Umwickeln der Rohre um die Enden der zwei isolierten Rohre verbunden ist, so dass die Verbindung eine Rohrform erhält, und
wobei die Hülse aus einem nicht-quervernetzten oder einem quervernetzten Polyäthylen oder Polypropylen gemacht ist, wobei der Stopfen (110) Folgendes aufweist:
- einen Stopfenkörper (102) mit Durchmessern mit rundem Querschnitt, die bezüglich der Größe von einem ersten Ende des Stopfenkörpers (104) zu einem zweiten Ende des Stopfenkörpers (106) abnehmen; und
- einen Stopfenbund (112) mit einer vorderen bzw. proximalen Oberfläche (114) und einer hinteren bzw. distalen Oberfläche (118), die entgegengesetzt zur proximalen Oberfläche ist, wobei der Stopfenkörper sich von der distalen Oberfläche des Stopfenbundes erstreckt und den größten Querschnittsdurchmesser am nächsten an dem Stopfenbund hat, und
wobei der mindestens eine Stopfen (110) aus einem Material gemacht ist, welches in mindestens einem konischen Loch (202) in der Verbindung (200) schweißbar ist, wenn der mindestens eine Stopfen (110) und die Wände des mindestens einen konischen Lochs (202) auf eine vorbestimmte Temperatur erwärmt sind.

9. Verwendung eines Stopfens (110) nach Anspruch 8, wobei der Stopfenkörper (102) eine glatte Oberfläche ohne Perforationen oder Vorsprünge hat.

10. Verwendung eines Stopfens (110) nach einem der Ansprüche 8-9, wobei die Oberfläche des Stopfenkörpers und die hintere bzw. distale Oberfläche des Stopfenbundes (112) einen größeren Winkel als 90 Grad bilden.

11. Verwendung eines Stopfens (110) nach einem der Ansprüche 8-10, wobei der Stopfen (110) aus Polyäthylen oder Polypropylen gemacht ist.

12. Verwendung eines Stopfens (110) nach einem der Ansprüche 8-11, wobei
- der kleineste Querschnittsdurchmesser des Stopfenkörpers (102) zwischen 19-26 mm oder zwischen 25-30 mm oder zwischen 30-35 mm ist, und/oder
- der größte Querschnittsdurchmesser des Stopfenkörpers (102) zwischen 22-30 mm oder zwischen 28-37 mm oder zwischen 35-45 mm ist,
- der Stopfenbund (112) eine Dicke zwischen 1-5 mm oder zwischen 2,5-4 mm oder zwischen 2-3 mm oder 2,5 mm hat, und/oder
- der größte Querschnittsdurchmesser zwischen 5-50% oder zwischen 15-40% oder zwischen 30-50% oder zwischen 45-55% größer ist als der kleineste Querschnittsdurchmesser.

13. Verwendung eines Stopfens (110) nach einem der Ansprüche 8-12, wobei der Stopfenbund (112)
• kreisförmig ist, vorzugsweise mit einem -durchmesser zwischen 2-8 cm oder zwischen 3-6 cm oder zwischen 5-8 cm oder zwischen 3-5 cm oder zwischen 3,5-4,5 cm oder 4 cm, oder
• oval geformt ist, vorzugsweise mit einer Hauptachse, die den größten Durchmesser des Stopfenbundes (112) definiert, und einer Nebenachse, die den kleinsten Durchmesser des Stopfenbundes (112) definiert, wobei, wenn der Stopfen in das konische Loch (202) in der Hülse geschweißt ist, die Hauptachse sich in der Längsrichtung der Hülse (200) erstreckt, oder
• rechteckig geformt ist; und
wobei der Stopfenbund (112) optional:
(i) eine verbesserte Flexibilität im Vergleich zu dem Stopfenkörper (102) hat, der steif ist, und/oder
(ii) sich entlang einer Achse so nach unten biegt, dass, wenn der Stopfen (110) in das konische Loch (202) geschweißt ist, der Stopfenbund (112) der Kontur der runden Hülse folgt.

14. Verwendung eines Stopfens (110) nach einem der Ansprüche 8-13, wobei der Stopfen weiter einen oberen Vorsprung aufweist, der sich von der proximalen Oberfläche des Bundes erstreckt, vorzugsweise symmetrisch bezüglich des Stopfenbundes positioniert, wobei der obere Vorsprung zur einfachen Handhabung des Stopfens ausgebildet ist.

15. Verwendung eines Stopfens (110) nach einem der Ansprüche 8-14, wobei der Stopfen (110) weiter einen Flicken aufweist, der größer ist als der Stopfenbund (112), wobei auf das Erwärmen des Flickens auf eine vorbestimmte Schweißtemperatur und das Positionieren des Flickens auf dem Stopfen, der in dem konischen Loch (202) in der Hülse (200) abgedichtet ist, der Flicken auf die proximale Oberfläche (114) des Stopfenbundes (112) und den Teil der Hülse (200) geschweißt wird, mit welchem der Flicken in Kontakt ist, wobei der Flicken vorzugsweise aus Polyäthylen oder Polypropylen gemacht ist.

16. Verfahren zur Abdichtung eines Lochs (202) in einer Hülse (200), welche isolierte städtische Heizungs- oder Kühlungsrohre verbindet, unter Verwendung eines Stopfens (110), wobei die Hülse eine Außenfläche und eine Innenfläche hat, wobei die Hülse eine der folgenden Arten ist:
• eine Schrumpfhülse mit einer Rohrform zur Verbindung von zwei isolierten Rohren;
• eine T-förmige Hülse zur Verbindung von drei isolierten Rohren;
• eine T-förmige Schrumpfhülse zur Verbindung von drei isolierten Rohren;
• eine offene Verbindung, die mit einem Ende von zwei isolierten Rohren durch Umwickeln der Rohre um die Enden der zwei isolierten Rohre verbunden ist, so dass die Verbindung eine Rohrform erhält, und
wobei der Stopfen (110) Folgendes aufweist:
- einen Stopfenkörper (102) mit Durchmesser mit rundem Querschnitt, die bezüglich der Größe von einem ersten Ende des Stopfenkörpers (104) zu einem zweiten Ende des Stopfenkörpers (106) abnehmen; und
- einen Stopfenbund (112) mit einer vorderen bzw. proximalen Oberfläche (114) und einer hinteren bzw. distalen Oberfläche (118), die entgegengesetzt zur proximalen Oberfläche (114) ist, wobei der Stopfenkörper sich von der distalen Oberfläche des Bundes erstreckt und den größten Querschnittsdurchmesser am nächsten an dem Stopfenbund hat, und
wobei das Verfahren folgende Schritte aufweist:
a) Vorsehen des Stopfens und Vorsehen der Hülse mit dem Loch;
b) Erwärmen von mindestens einer ersten Dichtungsfläche des Stopfens und der Wände des Lochs auf eine vorbestimmte Temperatur;
c) Einführen des Stopfens (110) in das Loch (202), so dass der Stopfenbund mit der Außenfläche der Hülse in Verbindung kommt, die das Loch umgibt, und so dass der Stopfenkörper in das Loch in der Hülse passt, wodurch eine Dichtungsverbindung, vorzugsweise durch Schweißen, erzeugt wird zwischen:
(i) der distalen Seite des Stopfenbundes und der Oberfläche um das Loch, und
(ii) den Wänden des Lochs und der ersten Dichtungsfläche des konischen Stopfenkörpers,
wobei das Loch (202) entweder:
• vor dem Schritt a) konisch geformt ist, und zwar mit einem kleineren Durchmesser an der Innenfläche als an der Außenfläche des Loches, oder
• während des Erwärmens des Loches im Schritt b) konisch gemacht wird, und zwar mit einem kleineren Durchmesser an der Innenfläche als an der Außenfläche des Loches.

17. Verfahren nach Anspruch 16, wobei das Loch (202) in der Hülse (200) von einer Vertiefung umgeben ist, wodurch ein sich vertiefender Oberflächenbereich um das Loch erzeugt wird, in welches der Stopfenbund passt, wenn der Stopfen in das Loch eingeführt wird.

18. Verfahren nach einem der Ansprüche 16-17, wobei im Schritt b) ein Heizwerkzeug zum Erwärmen von mindestens der ersten Dichtungsfläche des Stopfens und der Wände des Lochs in der Hülse auf die vorbestimmte Temperatur verwendet wird.

19. Verfahren nach einem der Ansprüche 16-18, wobei die vorbestimmte Temperatur im Schritt b) zwischen 230-270 Grad C ist, wodurch eine Schweißung zwischen den Dichtungsflächen des Stopfens und den Wänden des Loches und möglicherweise der Hülsenfläche ermöglicht wird, die das Loch umgibt.

20. Verfahren nach einem der Ansprüche 16-19, wobei nur die erste Dichtungsfläche des Stopfenkörpers und die Wände des Loches im Schritt b) erwärmt werden, und wobei das Verfahren weiter den Schritt aufweist, ein Klebemittel um das Loch und/oder auf der freigelegten distalen Oberfläche des Stopfens aufzubringen, bevor der Stopfen (110) in das Loch (202) eingeführt wird.

21. Verfahren nach einem der Ansprüche 16-20, wobei das Einführen des Stopfens (110) in das Loch (202) im Schritt c) ausgeführt wird durch folgende Unterschritte:
c1) Vorsehen eines Stopfenpresswerkzeugs, welches optional einen Handgriff zum Halten des Stopfenpresswerkzeugs von Hand während des Pressvorgangs aufweist;
c2) Anordnen des Stopfenkörpers (102) in dem Loch nach dem Erwärmen im schritt b); und
c3) Pressen des Stopfenbundes (112) gegen eine Außenfläche der Hülse mittels des Stopfenpresswerkzeugs, um eine Schweißung vorzusehen zwischen:
(i) der distalen Seite des Stopfenbundes und der Außenfläche der Hülse um das Loch, und
(ii) den Wänden des Lochs und der ersten Dichtungsfläche des Stopfenkörpers,
wobei das Stopfenpresswerkzeug einen Bundtragteil zum Tragen der proximalen Oberfläche des Bundes aufweist, wobei der Bundtragteil eine Breite hat, die größer ist als die Breite des Stopfenkörpers.

22. Verfahren nach einem der Ansprüche 17-21, welches den Schritt des Pressens des Stopfens (110) in das Loch (202) mit einer Kraft von 1-3 N/mm² für 30-90 Sekunden aufweist.

23. Verfahren nach einem der Ansprüche 17-22, wobei der Bundtragteil des Stopfenpresswerkzeugs eine Tragfläche zum Tragen bzw. Auflegen auf der proximalen Oberfläche des Stopfenbundes (112) hat, und wobei die Tragfläche vorzugsweise eine Oberflächenkontur, wie beispielsweise eine gekrümmte Oberflächenkontur, hat, die im Wesentlichen der Oberflächenkontur der Hülse (200) entspricht.

24. Verfahren nach einem der Ansprüche 16-23, wobei das Verfahren im Schritt b) den Stopfenbund (112) und die Außenfläche der Hülse (200) auf die vorbestimmte Temperatur erwärmt, und wobei das Pressen des Stopfenbundes (112) gegen eine Außenfläche der Hülse (200) mittels des Stopfenpresswerkzeugs eine Schweißung zwischen der distalen Oberfläche des Stopfenbundes und der Außenfläche der Hülse vorsieht, die das Loch (202) umgibt.

25. Verfahren nach einem der Ansprüche 21-24, wobei ein oberer Vorsprung sich von der proximalen Oberfläche des Bundes erstreckt, wobei der Stopfen so angeordnet ist, dass der obere Vorsprung sich in eine Vertiefung in dem Presswerkzeug während des Pressens des Stopfenbundes (112) gegen die Außenfläche der Hülse (200) erstreckt.

26. Verfahren nach einem der Ansprüche 16-25, wobei der Stopfen (110) und/oder die Hülse (200) aus Polyäthylen, quervernetztem Polyäthylen, Polypropylen oder quervernetztem Polypropylen gemacht ist/sind und/oder wobei die Wände des Lochs in der Hülse aus quervernetztem Material vor dem Erwärmen der ersten Dichtungsfläche des Stopfens (110) und der Wände des Loches (202) im Schritt b) vorgewärmt werden.

27. Verfahren nach einem der Ansprüche 16-26, welches weiter folgende Schritte aufweist:
d) Vorsehen eines flachen Flickens, der aus beispielsweise Polyäthylen oder Polypropylen gemacht ist und größer ist als der Stopfenbund (112),
e) Erwärmen des Flickens auf eine vorbestimmte Schwei ßtemperatur;
f) Positionieren des Flickens auf dem Stopfen, der in dem Loch in der Hülse abgedichtet ist, so dass der Flicken den Stopfenbund vollständig bedeckt und so dass der Flicken auf den Stopfenbund und einen Teil der Hülse geschweißt wird, mit welchem der Flicken in Kontakt ist.

## Revendications

1. Un système comprenant :
• un joint (200), le joint (200) comprenant au moins une position convenant au perçage d'un trou conique ou à laquelle un trou conique a été percé, le joint étant adapté pour raccorder des tuyaux de chauffage ou de refroidissement urbain isolés, le joint étant de l'un des types suivants :
∘ un manchon rétractable ayant une forme tubulaire pour raccorder deux tuyaux isolés ;
∘ un manchon en forme de T pour raccorder trois tuyaux isolés ;
∘ un manchon rétractable en forme de T pour raccorder trois tuyaux isolés ;
∘ un joint ouvert qui est attaché à une extrémité de deux tuyaux isolés en enroulant le joint autour des extrémités des deux tuyaux isolés de sorte que le joint prenne une forme tubulaire, et
• au moins un bouchon (110) pour fermer au moins un trou conique (202) dans le joint, ledit au moins un bouchon comprenant :
- un corps de bouchon (102) ayant des diamètres de section transversale ronde diminuant en taille d'une première extrémité (104) du corps de bouchon à une seconde extrémité (106) du corps de bouchon, et
- un collier de bouchon (112) avec une surface proximale (114) et une surface distale (118) à l'opposé de la surface proximale, le corps de bouchon s'étendant à partir de la surface distale du collier et ayant le plus grand diamètre de section transversale le plus proche du collier de bouchon, et
ledit au moins un bouchon (110) étant fabriqué à partir d'un matériau pouvant être soudé directement dans au moins un trou conique (202) dans le joint (200) lorsque ledit au moins un bouchon (110) et les parois d'au moins un trou conique (202) sont chauffés à une température prédéterminée.

2. Un système selon la revendication 1, le joint ayant un trou conique défini là-dedans.

3. Un système selon la revendication 2, le trou conique dans le joint étant entouré d'un renfoncement, créant ainsi une zone à surface abaissée autour du trou conique (202) dans laquelle le collier de bouchon (112) rentre lorsque le bouchon est introduit dans le trou conique (202).

4. Un système selon l'une quelconque des revendications précédentes, le joint (200) étant fait en une matière plastique non réticulée et/ou réticulée telle que, par exemple, du polyéthylène, du polyéthylène réticulé, du polypropylène ou du polypropylène réticulé, permettant au joint (200) de rétrécir sur les tuyaux isolés lorsqu'il est chauffé.

5. Un système selon l'une quelconque des revendications précédentes, le plus grand diamètre de section transversale du corps de bouchon (102) étant entre 15 et 40 % ou entre 40 et 55 % plus grand que le plus petit diamètre de section transversale du corps de bouchon.

6. Un système selon l'une quelconque des revendications précédentes, le bouchon (110) comprenant en outre une saillie supérieure (116) s'étendant à partir de la surface proximale du collier de bouchon (112), positionnée de préférence de manière symétrique par rapport au collier de bouchon (112), la saillie supérieure étant adaptée à une manipulation facile du bouchon (110).

7. Un système selon l'une quelconque des revendications précédentes 3 à 6, le renfoncement autour du trou conique (202) dans le manchon ayant une forme correspondant à celle du collier de bouchon (112), le collier de bouchon (112) étant de forme circulaire ou de forme ovale et le renfoncement s'étendant jusqu'à une profondeur étant au plus la même que l'épaisseur du collier de bouchon (112), l'épaisseur du collier de bouchon (112) étant plus petite que l'épaisseur du joint entourant le trou conique (202).

8. Utilisation d'un bouchon (110) pour fermer de façon étanche un trou conique (202) défini dans un manchon (200) raccordant des tuyaux de chauffage ou de refroidissement urbain isolés, le joint étant de l'un des types suivants :
• un manchon rétractable ayant une forme tubulaire pour raccorder deux tuyaux isolés ;
• un manchon en forme de T pour raccorder trois tuyaux isolés ;
• un manchon rétractable en forme de T pour raccorder trois tuyaux isolés ;
• un joint ouvert qui est attaché à une extrémité de deux tuyaux isolés en enroulant le joint autour des extrémités des deux tuyaux isolés de sorte que le joint prenne une forme tubulaire,
le manchon étant fait à partir d'un polyéthylène ou polypropylène non réticulé ou réticulé, le bouchon (110) comprenant :
- un corps de bouchon (102) ayant des diamètres de section transversale ronde diminuant en taille d'une première extrémité (104) du corps de bouchon à une seconde extrémité (106) du corps de bouchon, et
- un collier de bouchon (112) avec une surface proximale (114) et une surface distale (118) à l'opposé de la surface proximale, le corps de bouchon s'étendant à partir de la surface distale du collier et ayant le plus grand diamètre de section transversale le plus proche du collier de bouchon,
le bouchon (110) étant fabriqué à partir d'un matériau pouvant être soudé directement dans le trou conique (202) du manchon lorsque le bouchon (110) et le trou conique (202) dans le manchon sont chauffés à une température prédéterminée.

9. Utilisation d'un bouchon (110) selon la revendication 8, le corps de bouchon (102) ayant une surface lisse sans perforations ni saillies.

10. Utilisation d'un bouchon (110) selon l'une quelconque des revendications 8 à 9, la surface du corps de bouchon et la surface distale du collier de bouchon (112) formant un angle plus grand que 90 degrés.

11. Utilisation d'un bouchon (110) selon l'une quelconque des revendications 8 à 10, le bouchon (110) étant fait en polyéthylène ou en polypropylène.

12. Utilisation d'un bouchon (110) selon à l'une quelconque des revendications 8 à 11,
- le plus petit diamètre de section transversale du corps de bouchon (102) étant entre 18 et 26 mm ou entre 25 et 30 mm ou entre 30 et 35 mm, et/ou
- le plus grand diamètre de section transversale du corps de bouchon (102) étant entre 22 et 30 mm ou entre 28 et 37 mm ou entre 35 et 45 mm,
- le collier de bouchon (112) ayant une épaisseur entre 1 et 5 mm ou entre 2,5 et 4 mm ou entre 2 et 3 mm, ou de 2,5 mm, et/ou
- le plus grand diamètre de section transversale étant entre 5 et 50 % ou entre 15 et 40 % ou entre 30 et 50 % ou entre 40 et 55 % plus grand que le plus petit diamètre de section transversale.

13. Utilisation d'un bouchon (110) selon l'une quelconque des revendications 8 à 12, le collier de bouchon (112) étant :
• de forme circulaire, de préférence avec un diamètre compris entre 2 et 8 cm ou entre 3 et 6 cm ou entre 5 et 8 cm ou entre 3 et 5 cm ou entre 3,5 et 4,5 cm ou de 4 cm, ou
• de forme ovale, ayant de préférence un grand axe définissant le plus grand diamètre du collier de bouchon (112) et un petit axe définissant le plus petit diamètre du collier de bouchon (112), quand le bouchon est soudé dans le trou conique (202) dans le manchon, le grand axe s'étendant dans la direction longitudinale du manchon (200), ou
• de forme rectangulaire ; et
éventuellement, le collier de bouchon (112) :
(i) ayant une flexibilité améliorée par rapport au corps de bouchon (102) qui est rigide, et/ou
(ii) se pliant vers le bas le long d'un axe tel que, quand le bouchon (110) est soudé dans le trou conique (202), le collier de bouchon (112) suit les contours du manchon rond.

14. Utilisation d'un bouchon (110) selon l'une quelconque des revendications 8 à 13, le bouchon
comprenant en outre une saillie supérieure s'étendant à partir de la surface proximale du collier, étant positionnée de préférence symétriquement par rapport au collier de bouchon, la saillie supérieure étant adaptée pour faciliter la manipulation du bouchon.

15. Utilisation d'un bouchon (110) selon l'une quelconque des revendications 8 à 14, le bouchon (110)
comprenant en outre une pièce plate qui est plus grande que le collier de bouchon (112), lorsque la pièce est chauffée à une température de soudage prédéterminée et lorsque la pièce est positionnée au-dessus du bouchon fixé dans le trou conique (202) dans le manchon (200), la pièce étant soudée sur la surface proximale (114) du collier de bouchon (112) et une partie du manchon (200) avec laquelle la pièce est en contact, la pièce étant de préférence en polyéthylène ou en polypropylène.

16. Procédé pour fermer de façon étanche un trou (202) dans un manchon (200) raccordant des tuyaux de chauffage urbain ou de refroidissement isolés à l'aide d'un bouchon (110), le manchon ayant une surface extérieure et une surface intérieure, le manchon étant de l'un des types suivants :
• un manchon rétractable ayant une forme tubulaire pour raccorder deux tuyaux isolés ;
• un manchon en forme de T pour raccorder trois tuyaux isolés ;
• un manchon rétractable en forme de T pour raccorder trois tuyaux isolés ;
• un joint ouvert qui est attaché à une extrémité de deux tuyaux isolés en enroulant le joint autour des extrémités des deux tuyaux isolés de sorte que le joint prenne une forme tubulaire, et
le bouchon (110) comprenant :
- un corps de bouchon (102) ayant des diamètres de section transversale ronde diminuant en taille d'une première extrémité (104) du corps de bouchon à une seconde extrémité (106) du corps de bouchon, et
- un collier de bouchon (112) avec une surface proximale (114) et une surface distale (118) à l'opposé de la surface proximale, le corps de bouchon s'étendant à partir de la surface distale du collier et ayant le plus grand diamètre de section transversale le plus proche du collier de bouchon,
le procédé comprenant les étapes de :
a) fournir le bouchon et fournir le manchon avec le trou ;
b) chauffer au moins une première surface d'étanchéité du bouchon et des parois du trou à une température prédéterminée ;
c) insérer le bouchon (110) dans le trou (202) de sorte que le collier de bouchon s'attache à la surface extérieure du manchon entourant le trou et de sorte que le corps de bouchon rentre dans le trou dans le manchon, créant ainsi un raccordement étanche, de préférence par soudure, entre :
(i) le côté distal du collier de bouchon et la surface autour du trou, et
(ii) les parois du trou et la première surface d'étanchéité du corps de bouchon conique,
le trou (202) étant soit :
• de forme conique avec un diamètre plus petit à la surface intérieure qu'à la surface extérieure du trou avant l'étape a), ou
• fait de forme conique avec un plus petit diamètre à la surface intérieure qu'à la surface extérieure du trou lors du chauffage du trou à l'étape b).

17. Procédé selon la revendication 16, le trou (202) dans le manchon (200) étant entouré d'un renfoncement, créant ainsi une zone à surface abaissée autour du trou dans laquelle le collier de bouchon rentre lorsque le bouchon est introduit dans le trou.

18. Procédé selon l'une quelconque des revendications 16 à 17, à l'étape b), un outil de chauffage étant utilisé pour chauffer au moins la première surface d'étanchéité du bouchon et les parois du trou du manchon à la température prédéterminée.

19. Procédé selon l'une quelconque des revendications 16 à 18, la température prédéterminée à l'étape b) étant entre 230 et 270 °C facilitant ainsi le soudage entre les surfaces d'étanchéité du bouchon et les parois du trou et éventuellement la surface du manchon entourant le trou.

20. Procédé selon l'une quelconque des revendications 16 à 19, seulement la première surface d'étanchéité du corps de bouchon et les parois du trou étant chauffées à l'étape b), et le procédé comprenant en outre l'étape d'appliquer un adhésif autour du trou et/ou sur la surface distale exposée du bouchon avant d'insérer le bouchon (110) dans le trou (202).

21. Procédé selon l'une quelconque des revendications 16 à 20, l'insertion du bouchon (110) dans le trou (202) à l'étape c) étant fait par les sous-étapes de:
c1) fournir un outil pour presser le bouchon, comprenant éventuellement une poignée pour tenir l'outil pour presser le bouchon à la main pendant l'opération de pressage ;
c2) insérer le corps de bouchon (102) dans le trou après chauffage à l'étape b) ; et
c3) presser le collier de bouchon (112) contre une surface extérieure du manchon à l'aide de l'outil pour presser le bouchon de façon à réaliser une soudure entre :
(i) le côté distal du collier de bouchon et la surface extérieure du manchon autour du trou, et
(ii) les parois du trou et la première surface d'étanchéité du corps de bouchon,
l'outil pour presser le bouchon comprenant une partie de support de collier pour supporter la surface proximale du collier, la partie de support de collier ayant une largeur qui est plus grande que la largeur du corps de bouchon.

22. Procédé selon l'une quelconque des revendications 17 à 21, comprenant l'étape de presser le bouchon (110) dans le trou (202) avec une force de 1 à 3 N/mm² pendant 30 à 90 secondes.

23. Procédé selon l'une quelconque des revendications 21 à 22, la partie de support de collier de l'outil pour presser le bouchon ayant une surface d'appui pour s'appuyer sur la face proximale du collier de bouchon (112), et la surface d'appui ayant de préférence des contours de surface tels que des contours de surface arqués, correspondant sensiblement aux contours de surface du manchon (200).

24. Procédé selon l'une quelconque des revendications 16 à 23, à l'étape b), le procédé chauffant le collier de bouchon (112) et la surface extérieure du manchon (200) à la température prédéterminée, et la pression du collier de bouchon (112) contre une surface extérieure du manchon (200) à l'aide de l'outil pour presser le bouchon assurant une soudure entre la surface distale du collier du bouchon et la surface extérieure du manchon entourant le trou (202).

25. Procédé selon l'une quelconque des revendications 21 à 24, une saillie supérieure s'étendant à partir de la surface proximale du collier, le bouchon étant agencé de façon que la saillie supérieure s'étende dans un renfoncement dans l'outil pour presser pendant le pressage du collier de bouchon (112) contre la surface extérieure du manchon (200).

26. Procédé selon l'une quelconque des revendications 16 à 25, le bouchon (110) et/ou le manchon (200) étant fait(s) en polyéthylène, en polyéthylène réticulé, en polypropylène ou en polypropylène réticulé, et/ou les parois du trou dans le manchon en matériau réticulé étant préchauffé avant de chauffer la première surface d'étanchéité du bouchon (110) et les parois du trou (202) à l'étape b).

27. Procédé selon l'une quelconque des revendications 16 à 26, comprenant en outre les étapes de :
d) fournir une pièce plate faite, par exemple, en polyéthylène ou polypropylène, et étant plus large que le collier de bouchon (112) ;
e) chauffer la pièce à une température de soudage prédéterminée ;
f) positionner la pièce sur le bouchon fixé de façon étanche dans le trou dans le manchon de telle sorte que la pièce recouvre complètement le collier de bouchon et de sorte que la pièce soit soudé sur le collier de bouchon et la partie du manchon avec laquelle la pièce est en contact.
